# EUROPÄISCHE PATENTSCHRIFT

(11) **EP 0 408 580 B1**
(45) Veröffentlichungstag und Bekanntmachung des Hinweises auf die Patenterteilung: **18.08.1993**
(21) Anmeldenummer: 89902743.7
(22) Anmeldetag: 28.02.1989
(51) Int. Cl.: H04B 17/02

(54) **EINRICHTUNG ZUR IN-BETRIEB-ÜBERWACHUNG VON NACHRICHTENÜBERTRAGUNGSEINRICHTUNGEN**
DEVICE FOR IN-PROCESS MONITORING OF TRANSMISSION SYSTEMS
DISPOSITIF POUR CONTROLE EN SERVICE DE SYSTEMES DE TRANSMISSION DE MESSAGES

(30) Priorität: 03.03.1988 DE 3806947; 03.03.1988 DE 3806948
(43) Veröffentlichungstag der Anmeldung: 23.01.1991
(73) Patentinhaber: Philips Patentverwaltung GmbH, 22335 Hamburg (DE); Philips Electronics N.V., 5621 BA Eindhoven (NL); SIEMENS AKTIENGESELLSCHAFT, 80333 München (DE)
(72) Erfinder: HERRMANN, Karl, D-8501 Eckental (DE); NARJES, Ferdinand, D-8000 München 70 (DE); STEINER, Erhard, D-8031 Eichenau (DE); WEIMERT, Günter, D-8000 München 71 (DE)
(74) Vertreter: Fuchs, Franz-Josef, Dr.-Ing.
(86) Internationale Anmeldenummer: DE8900116
(87) Internationale Veröffentlichungsnummer: WO8908358

(56) Entgegenhaltungen:
- EP-A- 0 240 833
- DE-A-24 445 58

## Beschreibung

Die Erfindung bezieht sich auf eine wie im Oberbegriff des Patentanspruchs 1 angegebene Einrichtung zur In-Betrieb-Überwachung von Nachrichtenübertragungseinrichtungen.

Eine derartige Einrichtung ist bereits aus Ewald Braun und Erhard Steiner: Überwachung und zusätzliche Dienst der Digitalübertragungssysteme für Lichtwellenleiter" telcom report 10 (1987) Special "Multiplex- und Leitungseinrichtungen", Seiten 109 bis 114 bekannt.

Bei der bekannten Einrichtung zur In-Betrieb-Überwachung einer Nachrichtenübertragungseinrichtung werden Nutzsignale über eine elektrooptische Übertragungsstrecke und Telemetriesignale über einen Hilfskanal übertragen. Die Einrichtung verwendet adressenfreie Telemetrietelegramme, so daß die in den Leitungsendgeräten und Zwischenregeneratoren eines Übertragungsabschnittes vorgesehenen Prozessoreinheiten nicht adressiert zu werden brauchen. Das Verfahren läßt sich jedoch nicht ohne weiteres in Nachrichtenübertragungseinrichtungen anwenden, die eine Stern- bzw. Baumstruktur haben.

Aufgabe der Erfindung ist es daher, eine Einrichtung zu schaffen, die es gestattet, verzweigte Nachrichtenübertragungseinrichtungen zu überwachen.

Gemäß der Erfindung wird die Einrichtung zur Lösung dieser Aufgabe in der im kennzeichnenden Teil des Patentanspruchs 1 angegebenen Weise ausgebildet. Dabei ergibt sich für das Telegrammübertragungsnetz der Telemetrieeinrichtung eine dem Nutzsignalnetz entsprechende Struktur. Auf diese Weise kann man in einem Nachrichtenübertragungsnetz mit Stern- bzw. Baumstruktur im Telegrammübertragungsnetz der zugehörigen Telemetrieeinrichtung Prozessoreinheiten vorsehen, die durch die Überwachungseinheit in zyklischer Folge adressengesteuert aufgerufen werden.

Durch diese Maßnahmen ergibt sich der Vorteil, daß in Nachrichtenübertragungseinrichtungen, die ein aus Leitungsabschnitten zusammengesetztes Nachrichtenübertragungsnetz bilden und bei denen die Leitungsabschnitte jeweils einen Telemetriekanal aufweisen, mit Hilfe gleichartiger Geräte ein Telemetrienetz gewünschter Konfiguration geschaffen werden kann.

Vorteilhafte Weiterbildungen der Erfindung gehen aus den abhängigen Patentansprüchen hervor.

Die Ein-/Ausgänge können Vierdrahtanschlüsse oder Zweidrahtanschlüsse sein. Insbesondere ist für den Telemetriesignalkanal jeweils ein Vierdrahtanschluß und für den Datenbus ein Vierdraht- und/oder ein Zweidrahtanschluß vorgesehen.

Bei der Weiterbildung der Einrichtung nach Anspruch 5 kann der Mikroprozessor Überwachungsdaten der betreffenden Betriebsstelle aussenden oder Daten wahlweise in einem gesicherten Betrieb oder in einem Speicherbetrieb aussenden, wobei die Datenübertragung anstatt über die ODER- bzw. Exklusiv-Oder-Glieder über den betreffenden Umschalter erfolgt.

Die Erfindung wird anhand der in den Figuren dargestellten Ausführungsbeispiele näher erläutert.

Die Figuren zeigen Einrichtungen zur In-Betrieb-Überwachung von Nachrichtenübertragungseinrichtungen, und zwar
- Fig. 1: mit einem Digitalsignal-Grundleitungsabschnitt,
- Fig. 2: mit einem aus drei Digitalsignal-Grundleitungsabschnitten bestehenden Liniennetz,
- Fig. 3: mit einem mehrere parallele Linien enthaltenden Sternnetz,
- Fig. 4: mit einem verzweigten Sternnetz
- Fig. 5: eine Prozessoreinheit

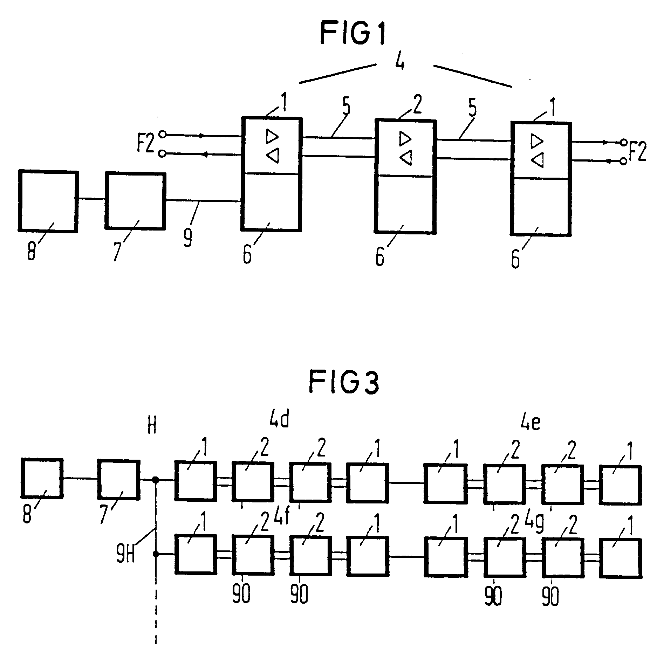

Leitungsendgeräte, Zwischenregeneratoren und Lichtwellenleiter sind die Grundelemente der in Fig. 1 gezeigten Digitalsignal-Übertragungsstrecke, deren Funktionsfähigkeit und Übertragungseigenschaften mit Hilfe von Geräten einer Einrichtung zur In-Betrieb-Überwachung bestehend aus dem Ortungsmodul 7, dem Personalcomputer 8 und den In-Betrieb-Überwachungs-Prozessoreinheiten im folgenden als Prozessoreinheiten 6 bezeichnet kontrolliert werden.

Das Ortungsmodul kann entfallen, wenn die Prozessoreinheiten 6 so ausgeführt werden, daß sie als Master oder als Slave geschaltet werden können. Dann muß eine Prozessoreinheit 6 als Master geschaltet werden und die Aufgaben des Ortungsmoduls übernehmen und die restlichen Prozessoreinheiten müssen als Slaves geschaltet werden.

Die kleinste Einheit einer Digitalsignal-Übertragungsstrecke ist ein Digitalsignal-Grundleitungsabschnitt 4, im folgenden als Leitungsabschnitt 4 bezeichnet. Bei der Übertragungseinrichtung nach Fig. 1 besteht der Leitungsabschnitt aus zwei Leitungsendgeräten 1 und einem oder mehreren bei Bedarf in die Strecke eingefügten Zwischenregeneratoren 2.

In jedes Leitungsendgerät 1 und in jeden Zwischenregenerator 2 ist eine Prozessoreinheit 6 eingesetzt, die über einen interen Bus die Überwachungsdaten von dem zu überwachenden Hauptsystem erhält.

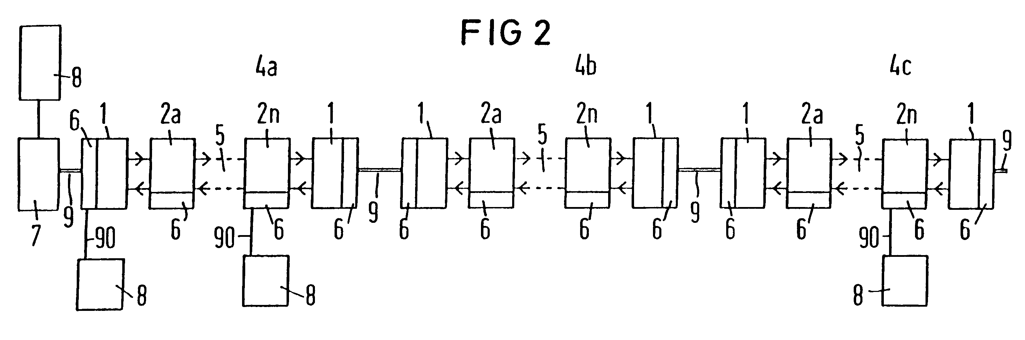

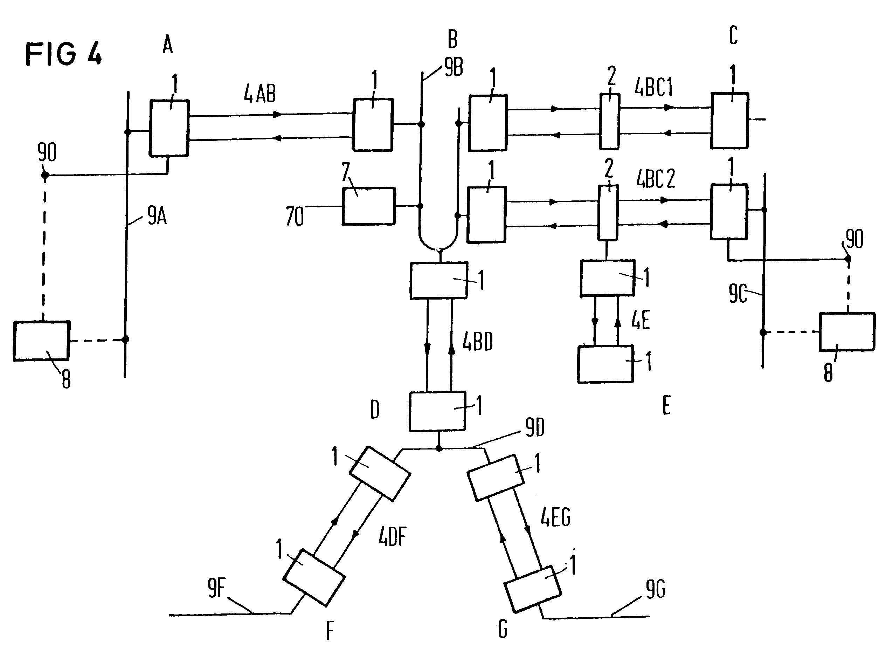

Der Ortungsbereich kann je nach Anforderungen aus folgenden Strukturen bestehen:
- einer Linie, die entsprechend Fig. 2 aus einem oder mehreren in Kaskade geschalteten Leitungsabschnitt 4 besteht,
- entsprechend Fig. 3 einem Netz mit parallelen Linien,
- nach Fig. 4 einem mit Abzweigungen versehenen Sternnetz.

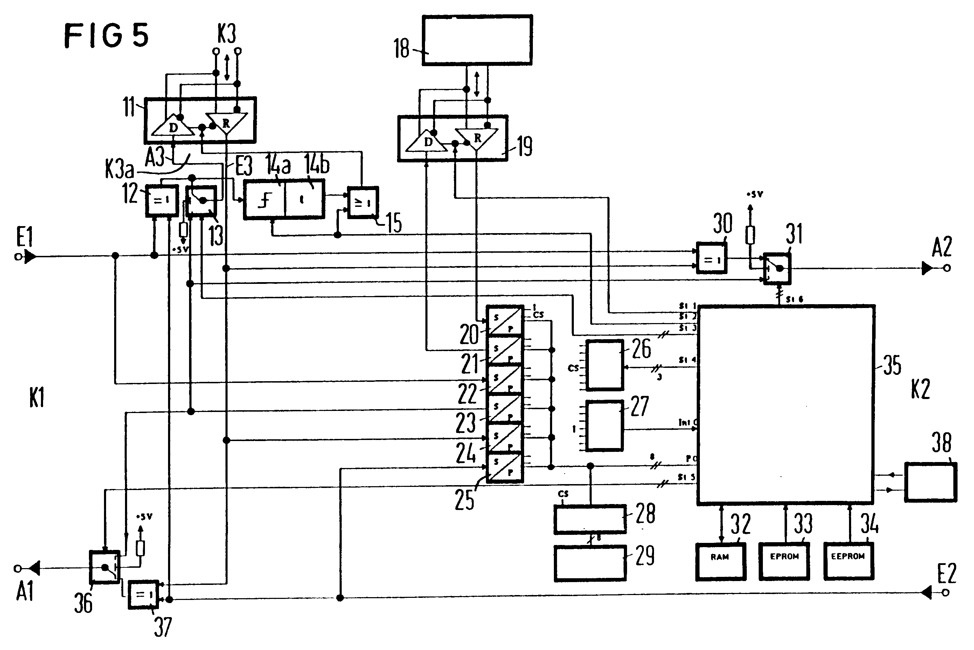

Jede Prozesseinheit 6 wird durch einen Mikroprozessor gesteuert und ist entsprechend Figur 5 aufgebaut. Sie hat im Leitungsendgerät 1 einenAnschluß K2 und im Zwischenregenerator 2 zwei Anschlüsse K1 und K2 - je einem für beide Richtungen - zur Ein- und Auskopplung in den dem Nutzsignal überlagerten Hilfskanal. Zusätzlich ist ein Anschluß K3 bzw. K3a für einen Netzknoten vorgesehen.

Je nach Anwendungsfall findet der Anschluß K3a mit zwei unidirektionalen oder der Anschluß K3 mit einer bidirektionalen Schnittstelle Verwendung.

Die Daten der Prozessoreinheiten 6 werden innerhalb eines Leitungsabschnitts 4 über die Anschlüsse K1, K2 ausgekoppelt und in einem dem Hilfskanal übertragen, der vorzugsweise dem Nutzsignal überlagert ist.

Innerhalb einer Linie werden die Daten der Prozessoreinheiten 6 von Leitungsendgerät 1 zu Leitungsendgerät 1 über die vierdrähtigen Anschlüsse K1, K2, in den Hilfskanal ein- und ausgekoppelt und gegebenenfalls von einem Leitungsabschnitt 4a Zum nächsten Leitungsabschnitt 4b über die Anschlüsse K3 bzw. K3a übertragen.

Bei der in Fig. 2 gezeigten Anordnung sind die Leitungsabschnitte 4a...4c in Kette geschaltet. In einer der beiden Endstellen der Kettenschaltung ist an die Prozessoreinheit 6 des Leitungsendgerätes 1 das Ortungsmodul angeschlossen. An dieses Ortungsmodul 7 ist ein Personalcomputer 8 angeschlossen. Weitere Personalcomputer 8 sind unmittelbar an die Prozessoreinheit 6 des ersten Leitungsendgerätes 1 und an zwei der Zwischenregeneratoren 2n angeschlossen.

Innerhalb der Leitungsabschnitte 4a...4c werden Nutzsignale von Leitungsendgerät 1 zu Leitungsendgerät 1 übertragen. Die Daten der Prozessoreinheiten 6 werden innerhalb der Leitungsabschnitte 4a...4c jeweils über einen Hilfskanal und zwischen den Leitungsabschnitten 4a...4c jeweils über einen ISM-Bus (In-Service-Monitoring-Bus) 9 mit der Schnittstelle RS 485 (Anschluß K3 der Prozessoreinheit 6) übertragen.

Alle Prozessoreinheiten 6 haben zusätzlich einen Anschluß 90, insbesondere mit der Schnittstelle RS 232 C, an den ein Personalcomputer 8 angeschlossen werden kann. Von dieser Möglichkeit ist bei einem Leitungsendgerät und bei zwei Zwischenregeneratoren Gebrauch gemacht.

Fig. 3 zeigt zwei von mehreren am Netzknoten N (Abzweig) endenden Linien.

Am Netzknoten N sind die Prozessoreinheiten der Leitungsendgeräte 1 und das Ortungsmodul 7 über den ISM-Bus 9 miteinander verbunden.

Nach Fig. 4 sind die Orte A bis G über ein verzweigtes Sternnetz miteinander verbunden. Zwischen den Orten A und B sind ein Leitungsabschnitt 4AB ohne Zwischenregenerator, zwischen den Orten B und C zwei Leitungsabschnitte 4BC1, 4BC2 mit je einem Zwischenregenerator 2, zwischen dem Ort B und dem Ort D ein Leitungsabschnitt 4BD und zwischen dem Ort D und F und D und G jeweils ein Leitungsabschnitt 4 DF und 4GE vorgesehen. Außerdem ist der Ort E über einen Leitungsabschnitt 4E mit dem Zwischenregenerator 2 des Leitungsabschnittes 4BC2 verbunden.

An den Orten A und C ist jeweils ein Personalcomputer 8 an die Prozessoreinheit des Leitungsendgerätes 1 angeschlossen. Der Personalcomputer 8 kann dabei wahlweise an den ISM-Bus 9 mit der Schnittstelle RS 485 oder an einen zusätzlichen Anschluß der Prozessoreinheit mit der Schnittstelle RS 232 C erfolgen. Am ISM-Bus 9 am Ort D ist zusätzlich zu den Leitungsendgeräten 1 der dort endenden Leitungsabschnitte das Ortungsmodul 7 angeschlossen, das mit einer Einrichtung zur Pollingsteuerung versehen ist. Das Ortungsmodul 7 hat zusätzlich einen Anschluß 70 zum Anschluß einer Signalsammeleinrichtung, über den die Überwachungsdaten des Sternnetzes vom Ortungsmodul 7 durch die Signalsammeleinrichtung abgerufen werden können.

Bei einem Abzweig werden die Daten der Prozessoreinheit 6 zwischen den Leitungsendgeräten 1 über die Anschlüsse K3 bzw. K4 und über den Netzknoten übertragen.

Bei den Netzen nach den Figuren 1 bis 4 ist an einem der Netzknoten oder an einer der Prozessoreinheiten eine Vorrichtung zur Ablaufsteuerung, insbesondere ein Ortungsmodul 7 und/oder ein Personalcomputer 8 angeschlossen. Das Ortungsmodul 7 oder ein Personalcomputer 8 ruft die einzelnen Prozessoreinheiten 6 nacheinander per Aufruftelegramm mit ihren Adressen auf, erhält deren Überwachungsdaten per Antworttelegramm und wertet diese aus.

Wie aus den Figuren ersichtlich, kann ein Ortungsbereich aus mehreren Digitalsignalgrundleitungsabschnitten bestehen. Zur Weitergabe der In-Betrieb-Überwachungsdaten von einem Digitalsignalgrundleitungsabschnitt zum nächsten Digitalsignalgrundleitungsabschnitt eines Liniennetzes oder zu weiteren an einem Netzknoten angeschlossenen Digitalsignalgrundleitungsabschnitten ist der Anschluß K3 der Prozessoreinheit vorgesehen. Dieser Anschluß kann aus zwei unidirektionalen Schnittstellen, einem Dateneingang und einem Datenausgang bestehen. In diesem Fall werden zweckmäßiger Weise an den Abzweigstellen über an sich bekannte Vierdrahtgabeln die Daten aller Ausgänge in alle Eingänge geführt. Andererseits kann zu diesem Zweck z. B. ein Ankoppler Verwendung finden, wie er aus der DE-PS 20 48 140 bekannt ist.

Mit geringerem Aufwand kann die Verteilung der Daten in den Netzknoten über einen bidirektionalen Bus vorgenommen werden. Um Datenkollisionen zu vermeiden, darf jedoch an einem Bus jeweils nur ein Treiber aktiv sein. Bei Verwendung eines bidirektionalen Busses ist daher für das Ein- und Anschalten eines Bustreibers der folgende Ablauf vorgesehen:
Im Ruhezustand sind alle Treiber inaktiv und haben einen hochohmigen Ausgang. Wenn an einem Anschluß K1, K2 Daten ankommen, wird durch die Flanke des Startbits ein Zeitglied gestartet, das den Treiber für mindestens zwei Zeichen aktiviert. Das weitere Halten und Ausschalten übernimmt dann der Mikrocomputer, dem die Daten parallel zugeführt wurden. Nur wenn eine Störung bei der Übertragung auftritt - erkannt durch Parity- oder Checksummenverletzung oder Verletzung eines zyklischen redundanten Codes (cyclic redundancy check) oder Nichtübereinstimmung eines Längenbytes - wird in einen Modus umgeschaltet, bei dem alle Daten vor dem Weiterreichen kontrolliert werden und nur korrekte Daten weitergeführt werden. Dieser Modus kann vom Ortungsmodul per Fernsteuerbefehl ein- und ausgeschaltet werden.

Vorteil dieses Verfahrens ist, daß die Daten bei ungestörter Übertragung schnell durchgeschaltet werden, so daß sich ein kurzer Abfragezyklus ergibt und bei gestörter Übertragung im Hilfskanal ein Orten des Fehlers möglich ist.

Die in Fig. 5 gezeigte Prozessoreinheit hat einen Eingang E1 und Ausgang A1 zum Anschluß eines ersten vierdrähtigen Datenkanals zur Übertragung von Telegrammen, einen Eingang E2 und Ausgang A2 zum Anschluß eines zweiten vierdrähtigen Datenkanals und einen dritten Eingang E3 und Ausgang A3 zum Anschluß eines dritten vierdrähtigen Datenkanals.

Jeder der drei Ausgänge A1, A2 und A3 läßt sich über einen durch den Mikroprozessor 35 steuerbaren Umschalter 36, 31 bzw. 13 wahlweise an den Ausgang eines Exklusiv-ODER-Gliedes 37, 30 bzw. 12 oder an den Ausgang eines Parallel-Serien-Wandlers 23 anschließen. Dieser Parallel-Serien-Wandler 23 ist mit seinem Paralleleingang an den Port PO des Mikroprozessors 35 angeschlossen. Dabei wird der Umschalter 36 über die zweiadrige Steuerleitung St5, der Umschalter 13 über die zweiadrige Steuerleitung St3 und der Umschalter 31 über die zweiadrige Steuerleitung St6 vom Mikroprozessor 35 gesteuert.

Die Exklusiv-Oder-Glieder 12, 30 und 37, die jeweils zu einem Ausgang eines der drei Vierdrahtanschlüsse führen und gegebenenfalls durch ODER-Glieder ersetzt sein können, verknüpfen die an den Eingängen der beiden anderen Vierdrahtanschlüsse ankommenden Daten.

Die Serien-Parallel-Wandler 20, 22, 24 und 25 sowie die Parallel-Serien-Wandler 21 und 23 sind in UART-Bausteinen oder in HDLC-Bausteinen enthalten. Die Serien-Parallel- bzw. Parallel-Serien-Wandler 20 bis 25 sind über einen 8-bit-Parallel-Bus an den Port PO des Mikroprozessors 35 angeschlossen und werden durch den mit dem Mikroprozessor 35 verbundenen Chip-Select-Baustein 26 ausgewählt. Durch den ebenfalls an den Mikroprozessor 35 angeschlossenen Interrupt-Baustein 27 unterbrechen sie bei Bedarf das Programm des Mikroprozessors.

An den Port PO des Mikroprozessors 35 ist außerdem der Codierschalter 29 über den Schalter 28 angeschlossen, mit dessen Hilfe die Prozessoreinheit auf eine Adresse und auf die Funktion eines Adressier-Leitungsendgerätes eingestellt werden kann.

An den Mikroprozessor 35 sind außerdem noch das als Datenspeicher dienende RAM 32, das als Programmspeicher dienende EPROM 33, das als nicht flüchtiger Datenspeicher dienende EEPROM 34 und der Baustein 38 zur Eigenüberwachung angeschlossen.

Der Ausgang des Exklusiv-ODER-Gliedes 12 ist über die Vorrichtung 14a zur Flankenerkennung und die dieser in Kette geschaltete Vorrichtung 14b an den einen Eingang des ODER-Gliedes 15 geführt. Der andere Eingang des ODER-Gliedes 15 ist zusammen mit einem Steuereingang der Einrichtungen 14a und 14b an die vom Mikroprozessor 35 kommende Steuerleitung St2 angeschlossen.

Zwischen dem Vierdraht-Anschlußpaar E3, A3 und dem Busanschluß K3 zum Anschluß eines bidirektionalen Busses liegt der Sende-Empfangs-Baustein 11. Der Steuereingang dieses Sende-und Empfangs-Bausteins 11, über den sich wahlweise der Sender D oder der Empfänger R aktivieren läßt, ist an den Ausgang des ODER-Gliedes 15 angeschlossen.

Im Normalbetrieb werden die Telegramme vom Dateneingang E1 oder E3 über das Exklusiv-ODER-Glied 30 und den Schalter 31 direkt zum Ausgang A2 weitergegeben. Vom Eingang E2 oder E3 gelangen die Telegramme über das Exklusiv-ODER-Glied 37 und den Schalter 36 zum Ausgang A1.

Das Exklusiv-ODER-Glied 12 bzw. 30, bzw. 37 sorgt dafür, daß keine Daten übertragen werden, wenn Daten gleichzeitig an den Eingängen E1 und E2 bzw. E1 und E3 bzw. E2 und E3 ankommen.

Da bei fehlerfreiem Betrieb keine Daten gleichzeitig am Eingang E1, E2 und E3 ankommen dürfen, werden durch die Exklusiv-ODER-Glieder 12, 37 und 30 Daten nur im Fehlerfall gesperrt.

Daten, die am Eingang E1 oder E2 ankommen, können auch über das Exklusiv-ODER-Glied 12 und den Schalter 13 an den Sender D des Sende-Empfangs-Bausteins 11 und von diesem an den Busanschluß K3 gelangen. Hierzu muß sich der Schalter 13 in der gezeigten Normalstellung befinden und der Sender D aktiviert sein. Dies ist dann der Fall, wenn die Vorrichtung 14a eine Anstiegsflanke erkennt und das Oder-Glied 15 über die Vorrichtung 14b und/oder über die Steuerleitung St2 ein entsprechendes Steuerpotential erhält.

Werden im Normalbetrieb Daten über das Exklusiv-ODER-Glied 12 zum Busanschluß K3 geleitet, so werden diese Daten auch in die Vorrichtung 14a zur Flankenerkennung eingespeist. Erkennt die Vorrichtung 14a zur Flankenerkennung die Anstiegsflanke des ersten Bit eines Telegramms, so startet sie die Zeitschaltung 14b. Diese Zeitschaltung gibt einen Ausgangsimpuls ab, der unabhängig von der Bitfolge ist, die am Eingang der Vorrichtung 14a zur Flankenerkennung ankommt. Der Ausgangsimpuls gelangt über das ODER-Glied 15 zum Sende-Empfangs-Baustein 11 und schaltet sofort den Treiberbaustein D ein und den Empfangs-Baustein R aus. Daten, die an einem der Eingänge E1 oder E2 der Prozessoreinheit ankommen, werden so durch das Erkennen einer ansteigenden Flanke sofort an den Busanschluß K3 weitergegeben.

Gleichzeitig werden die Daten dem Mikroprozessor 35 zur Verarbeitung übertragen. Daten, die am Eingang E1 ankommen, gelangen über den Serien-Parallel-Wandler 22 zum Mikroprozessor 35, Daten vom Eingang E2 über den Serien-Parallel-Wandler 25 und Daten vom Eingang E3 über den Serien-Parallel-Wandler 24 zum Mikroprozessor 35. Die Serien-Parallel-Wandler 22, 24 und 25 nehmen die Daten byteweise auf und geben immer dann einen Interrupt-Impuls an den Mikroprozessor 35 ab, wenn sie ein Byte geladen haben, um es an den Port PO des Mikroprozessors 35 abzugeben. Stellt der Mikroprozessor 35 fest, daß die Daten vorgegebene Forderungen erfüllen, dann aktiviert er die Steuerleitung St2. Hierdurch schaltet der Mikroprozessor 35 über das ODER-Glied 15 den Treiber-Baustein D des Interface-Bausteins 11 ein.

Stellt der Mikroprozessor 35 bei der Auswertung eines Telegrammes fest, daß vorgegebene Anforderungen nicht erfüllt wurden, so veranlaßt er die Prozessor-Einheit, in einen Speicherbetrieb überzugehen. Im Speicherbetrieb aktiviert der Mikroprozessor 35 zwei von den drei Steuerleitungen St3, St5 und St6. Zwei von den drei Schaltern 13, 31 und 36 schalten daher um, so daß alle Daten, die der Parallel-Serien Wandler 23 abgibt, an zwei von den drei Ausgängen A1, A2, K3 gelangen, aus deren Richtung das Telegramm nicht empfangen wurde.

Die am Eingang E1 ankommenden Daten werden im Serien-Parallel-Wandler 22, die am Eingang E2 ankommenden Daten im Serien-Parallel-Wandler 25 verarbeitet. Der Mikroprozessor 35 erkennt also, aus welcher Richtung die Daten kommen. Im Speicherbetrieb werden daher die Steuerleitungen St6 und die Steuerleitungen St5 so aktiviert, daß der Ausgang A1 oder A2 über den nicht gesendet wird, über den Schalter 31 oder 36 und den Pull-up-Widerstand auf High-Potential gelegt wird.

Der Signalsammler 18 ist über den Interface-Baustein 19 und den Serien-Parallel-Wandler 20 und den Parallel-Serien-Wandler 21 an den Mikroprozessor 35 angeschlossen. Der Signalsammler 18 liefert die Überwachungsdaten der überwachten Zwischenstelle und erhält gegebenenfalls die im Aufruftelegramm enthaltenen Steuerinformationen zur Weitergabe an eine nicht dargestellte Signal-Sammeleinrichtung. Die Überwachungsdaten der überwachten Zwischenstelle werden vom Prozessor 35 über den Parallel-Serien-Wandler 23, über die Umschalter 13, 31, 36 und über die Ausgänge A1, A2, A3 in alle drei Richtungen K1, K2 und K3 gesendet. Sind an einem Netzknoten mehrere Anschlüsse K3 über einem bidirektionalen Bus miteinander verbunden, so ergibt sich folgender Ablauf für das Ein- und Ausschalten eines Bustreibers:
Im Ruhezustand sind alle Treiber inaktiv und haben einen hochohmigen Ausgang. Wenn am Anschluß K1 oder K2 Daten ankommen, wird durch die Flanke des Startbits das Zeitglied 14b gestartet, das den Treiber für mindestens zwei Zeichen aktiviert. Das weitere Halten und Ausschalten übernimmt dann der Mikrocomputer 35, dem die Daten parallel zugeführt wurden.

## Patentansprüche

1. Einrichtung zur Fehlerortung und/oder In-Betrieb-Überwachung für Nachrichtenübertragungseinrichtungen, die wenigstens eine Übertragungsstrecke (4) mit zwei Leitungsendgeräten (1) enthalten, zwischen denen gegebenenfalls ein oder mehrere Zwischenstellen (2) vorgesehen sein können, mit einer Überwachungseinheit (7, 8), die mit Prozessoreinheiten (6), die überwachten Endstellen und/oder zwischenstellen zugeordnet sind, über wenigstens einen Telemetriekanal Informationen austauscht,
**dadurch gekennzeichnet,**
daß die Prozessoreinheiten (6) mit Adressen versehen sind und daß die Überwachungseinheit (7, 8) eine Vorrichtung zum Aussenden von Adressen enthaltenden Abfragetelegrammen an die Prozessoreinheiten (6) und eine Vorrichtung zum Empfangen eines Antworttelegrammes der jeweils aufgerufenen Prozessoreinheit (6) aufweist und daß die Nachrichtenübertragungseinrichtung an wenigstens einem Ort (A...H) mehrere Prozessoreinheiten (6) enthält, die über einen Datenbus (9; 9A...9H) miteinander verbunden sind, der die Telemetriekanäle mehrerer Übertragungsstrecken (4a...4EG) miteinander verbindet.

2. Einrichtung nach Anspruch 1,
**dadurch gekennzeichnet,**
daß der die Prozessoreinheiten (6) verbindende Datenbus ein bidirektionaler Bus (9) für Halbduplexbetrieb ist.

3. Einrichtung nach Anspruch 1 oder 2,
**dadurch gekennzeichnet,**
daß die Prozessoreinheit (6) wenigstens einen Ein-/Ausgang (K1, K2) zum Anschluß eines Vierdraht-Telemetriekanals und wenigstens einen Ein-/Ausgang (K3, K3a) zum Anschluß des Datenbusses und eine Koppelvorrichtung enthält, die in einem Ruhezustand bei Empfang von Daten am Eingang (E1...E3) eines der Ein-/Ausgänge die empfangenen Daten an die Ausgänge (A1...A3) der anderen Ein-/Ausgänge (K1, K2, K3, K3a) weitergibt.

4. Einrichtung nach Anspruch 3,
**dadurch gekennzeichnet,**
daß bei jedem der Ein-/Ausgänge (K1, K2, K3, K3a) der Prozessoreinheit dem Ausgang ein ODER-Glied oder ein Exklusiv-Oder-Glied (12) vorgeschaltet ist und daß zwei Eingänge des ODER- bzw. Exklusiv-Oder-Gliedes (12) mit den Eingängen der beiden anderen Ein-/Ausgänge verbunden sind.

5. Einrichtung nach Anspruch 3,
**dadurch gekennzeichnet,**
daß bei jedem der Ein-/Ausgänge (K1, K2, K3) der Prozessoreinheit (6) der Ausgang an einen Datenausgang des Mikroprozessors (35) angeschlossen ist und daß der Mikroprozessor (35) bei Empfang von Daten am Eingang eines der Ein-/Ausgänge (K1...K3) die empfangenen Daten an die Ausgänge (A1, A2, A3) der anderen Ein-/Ausgänge (K1...K3) weitergibt.

6. Einrichtung nach Anspruch 3,
**dadurch gekennzeichnet,**
daß bei jedem der Ein/Ausgänge (K1...K3) der Prozessoreinheit (6) der Ausgang (A1...A3) an einen Datenausgang des Mikroprozessors (35) angeschlossen ist und daß der Mikroprozessor (35) bei Empfang von Daten an wenigstens zwei Eingängen (E1...E3) der Ein-/Ausgänge (K1...K3) die empfangenen Daten nicht an die Ausgänge (A1...A3) der anderen Ein-/Ausgänge (K1...K3) weitergibt.

7. Einrichtung nach einem der Ansprüche 1 bis 6,
**dadurch gekennzeichnet,**
daß bei der Prozessoreinheit (35) jedem der Ausgänge (A1...A3) ein Umschalter (13, 31 36) vorgeschaltet ist, der wahlweise die Koppelvorrichtung oder einen Datenausgang des Mikroprozessors (35) mit dem betreffenden Ausgang (A1...A3) verbindet.

8. Einrichtung nach einem der Ansprüche 1 bis 7,
**dadurch gekennzeichnet,**
daß wenigstens die mit dem Datenbus (9; 9A...9H) verbundenen Prozessoreinheiten (6) jeweils eine Sende-Empfangseinheit (11) enthalten, und daß die Sende-Empfangseinheiten (11) durch den Mikroprozessor (35) der jeweiligen Prozessoreinheit (6) derart steuerbar sind, daß im Ruhezustand alle Sender der Sende-Empfangseinheiten (11) an ihrem Ausgang hochohmig sind und beim Aussenden von Daten vorgegebene Logikpegel abgeben.

9. Einrichtung nach Anspruch 8,
**dadurch gekennzeichnet,**
daß die Sende-Empfangseinheit (11) durch eine Vorrichtung (14a) zur Flankenerkennung derart steuerbar ist, daß durch die Flanke eines Startbits der an einem der Telemetrieeingänge (E1...E3) ankommenden Daten ein Zeitglied (14b) gestartet wird, das den Sender (D) der Sende-Empfangseinheit (11) für die Dauer von mindestens zwei Zeichen aktiviert und gleichzeitig den Empfänger (R) der Sende-Empfangseinheit (11) sperrt und daß das weitere Halten und Ausschalten vom Mikroprozessor (35) übernommen wird, dem die Daten gleichzeitig zugeführt werden.

## Claims

1. Device for fault finding and/or in-service monitoring of information transmission devices which contain at least one transmission link (4) with two line terminals (1), between which one or a number of intermediate stations (2) may be provided, comprising a monitoring unit (7, 8) which exchanges information with processing units (6) which are allocated to monitored terminal stations and/or intermediate stations, via at least one telemetry channel, characterised in that the processing units (6) are provided with addresses and that the monitoring unit (7, 8) exhibits a device for sending out interrogation messages, containing addresses, to the processing units (6) and a device for receiving a response message from the processing unit (6) in each case called, and in that the information transmission device contains at at least one location (A...H) a number of processing units (6) which are connected to one another via a data bus (9; 9A...9H) which connects the telemetry channels of a number of transmission links (4a...4EG) with one another.

2. Device according to Claim 1, characterised in that the data bus connecting the processing units (6) is a bidirectional bus (9) for half-duplex operation.

3. Device according to Claim 1 or 2, characterised in that the processing unit (6) contains at least one input/output (K1, K2) for connecting a four-wire telemetry channel and at least one input/output (K3, K3a) for connecting the data bus and a switching device which, in a rest state, when receiving data at the input (E1...E3) of one of the inputs/outputs, forwards the received data to the outputs (A1...A3) of the other inputs/outputs(K1, K2, K3, K3a).

4. Device according to Claim 3, characterised in that at each of the inputs/outputs (K1, K2, K3, K3a) of the processing unit, the output is preceded by an OR gate or an exclusive OR gate (12) and in that two inputs of the OR or exclusive OR gate (12) are connected to the inputs of the two other inputs/outputs.

5. Device according to Claim 3, characterised in that at each of the inputs/outputs (K1, K2, K3) of the processing unit (6), the output is connected to a data output of the microprocessor (35), and in that the microprocessor (35), when receiving data at the input of one of the inputs/outputs (K1...K3), forwards the received data to the outputs (A1, A2, A3) of the other inputs/outputs (K1...K3).

6. Device according to Claim 3, characterised in that at each of the inputs/outputs (K1...K3) of the processing unit (6), the output (A1...A3) is connected to a data output of the microprocessor (35), and in that the microprocessor (35), when receiving data at at least two inputs (E1...E3) of the inputs/outputs (K1...K3), does not forward the received data to the outputs (A1...A3) of the other inputs/outputs (K1...K3).

7. Device according to one of Claims 1 to 6, characterised in that in the processor unit (35), each of the outputs (A1...A3) is preceded by a changeover switch (13, 31, 36), which optionally connects the switching device or a data output of the microprocessor (35) to the relevant output (A1...A3).

8. Device according to one of Claims 1 to 7, characterised in that at least the processing units (6) connected to the data bus (9; 9A...9H) in each case contain a transmitting/receiving unit (11), and in that the transmitting/receiving units (11) can be controlled by the microprocessor (35) of the respective processing unit (6) in such a manner that in the rest state, all transmitters of the transmitting/receiving units (11) have a high impedance at their output and output predetermined logic levels when sending out data.

9. Device according to Claim 8, characterised in that the transmitting/receiving unit (11) can be controlled by a device (14a) for edge detection, in such a manner that the edge of a start bit of the incoming data at one of the telemetry inputs (E1...E3) starts a timing section (14b) which activates the transmitter (D) of the transmitting/receiving unit (11) for the duration of at least two characters and, at the same time, inhibits the receiver (R) of the transmitting/receiving unit (11), and in that the further holding and switching-off is handled by the microprocessor (35) which is supplied with the data at the same time.

## Revendications

1. Dispositif de localisation de défauts et/ou de contrôle en fonctionnement pour des dispositifs de transmission d'informations, qui comportent au moins une section de transmission (4) à deux terminaux de ligne (1), entre lesquels peuvent éventuellement être prévus un ou plusieurs postes intermédiaires (2), et comportant une unité de contrôle (7,8), qui échange, par au moins un canal de télémétrie, des informations avec des unités à processeur (6), qui sont associés à des terminaux contrôlés et/ou à des postes intermédiaires,
caractérisé par le fait
que les unités à processeur (6) sont pourvues d'adresses et que l'unité de contrôle (7,8) comporte un dispositif pour envoyer aux unités à processeur (6) des télégrammes d'interrogation contenant des adresses, et un dispositif pour recevoir un télégramme de réponse de l'unité à processeur (6) respectivement appelée, et que le dispositif de transmission d'informations comporte, en au moins un emplacement (A...H), plusieurs unités à processeurs (6), qui sont raccordées entre elles par l'intermédiaire d'un bus de transmission de données (9; 9A...9H), qui raccorde entre eux les canaux de télémétrie de plusieurs sections de transmission (4a...4EG).

2. Dispositif suivant la revendication 1, caractérisé par le fait que le bus de transmission de données qui relie les unités à processeurs (6), est un bus bidirectionnel (9) pour le fonctionnement en semi-duplex.

3. Dispositif suivant la revendication 1 ou 2, caractérisé par le fait que l'unité à processeur (6) comporte au moins une entrée/sortie (K1, K2) pour le raccordement d'un canal de télémétrie à quatre fils et au moins une entrée/sortie (K3, K3a) pour le raccordement du bus de transmission de données et un dispositif de couplage, qui, dans son état de repos, retransmet, lors de la réception de données à l'entrée (E1...E3) de l'une des entrées/sorties, les données reçues, aux sorties (A1...A3) des autres entrées/sorties (K1, K2, K3a).

4. Dispositif suivant la revendication 3, caractérisé par le fait que pour chacune des entrées/sorties (K1, K2, K3a) de l'unité à processeur, un circuit OU ou un circuit OU-Exclusif (12) est branché en amont de la sortie, et que deux entrées du circuit OU ou du circuit OU-Exclusif (12) sont raccordées aux entrées des deux autres entrées/sorties.

5. Dispositif suivant la revendication 3, caractérisé par le fait que pour chacune des entrées/sorties (K1, K2, K3) de l'unité à processeur (6) , la sortie est raccordée à une sortie de données du microprocesseur (35) et que lors de la réception de données à l'entrée de l'une des entrées/sorties (K1...K3), le microprocesseur (35) retransmet les données reçues aux sorties (A1,A2,A3) des autres entrées/sorties (K1...K3).

6. Dispositif suivant la revendication 3, caractérisé par le fait que pour chacune des entrées/sorties (K1...K3) de l'unité à processeur (6), la sortie (A1...A3) est raccordée à une sortie des données du microprocesseur (35) et que lors de la réception de données sur au moins deux entrées (E1...E3) des entrées/sorties (K1...K3), le microprocesseur (35) ne retransmet pas les données reçues aux sorties (A1...A3) des autres entrées/sorties (K1...K3).

7. Dispositif suivant l'une des revendications 1 à 6, caractérisé par le fait que pour l'unité à proceseur (35), en amont de chacune des sorties (A1...A3) est branché un commutateur (13,31,36), qui relie au choix le dispositif de couplage ou une sortie des données du microprocesseur (35) à la sortie concernée (A1...A3).

8. Dispositif suivant l'une des revendications 1 à 7, caractérisé par le fait qu'au moins les unités à processeur (6) raccordées au bus de transmission de données (9; 9A...9H) comportent respectivement une unité d'émissionréception (11), et que les unités d'émission-réception (11) peuvent être conmandées par le microprocesseur (35) de l'unité à processeur respective (6) de manière qu'à l'état de repos, tous les émetteurs des unités d'émission-réception (11) présentent une forte valeur ohmique à leur sortie et délivrent, lors de l'émission de données, des niveaux logiques prédéterminés.

9. Dispositif suivant la revendication 8, caractérisé par le fait que l'unité d'émission-réception (11) peut être commandée par un dispositif (14a) servant à l'identification de flancs de telle manière que le flanc d'un bit de départ des données qui arrivent à l'une des entrées de télémétrie (E1...E3), fait démarrer un circuit de temporisation (14b), qui active l'émetteur (D) de l'unité d'émission-réception (11) pendant la durée d'au moins deux caractères et simultanément bloque le récepteur (R) de l'unité d'émission-réception (11), et que le blocage ultérieur et la désactivation ultérieure sont assurés par le microprocesseur (35), auquel les données sont simultanément envoyées.
